# DEMANDE DE BREVET EUROPEEN

(11) **EP 4 671 012 A1**
(43) Date de publication de la demande: **31.12.2025**
(21) Numéro de dépôt: 25182580.8
(22) Date de dépôt: 13.06.2025
(51) Int. Cl.: B60J 5/06, B60J 5/10, E05D 11/06

(54) **CAISSE DE VEHICULE AUTOMOBILE DE TYPE FOURGON**

(30) Priorité: 28.06.2024 FR 2407115
(71) Demandeur: Renault s.a.s, 92100 Boulogne Billancourt (FR)
(72) Inventeur: RICHARD, Laurent, 78640 VILLIERS SAINT FREDERIC (FR)

(57) **Abrégé**

L'invention concerne une caisse (10) de véhicule automobile de type fourgon, comportant :
- au moins une porte battante arrière (12) rabattable le long d'un côté (18) de ladite caisse (10),
- au moins une porte latérale coulissante (20), apte à s'étendre parallèlement audit côté (18) de la caisse (10),
caractérisée en ce que :
- chaque ouverture arrière (12) ou latérale (20) est équipée d'un moyen (46, 48) de détection d'absence de la porte arrière (12) ou latérale (20) associée, apte à détecter l'ouverture de ladite porte (12, 20),
- la caisse (10) est équipée de moyens (52, 54) de limitation de course de l'ouverture de chaque porte (12, 20),
- chaque moyen (52, 54) de limitation de course d'une porte (12, 20) est activé en réponse à la détection de l'ouverture de l'autre porte (20, 12) par ledit moyen de détection (48, 46) d'absence de l'autre porte (20, 12).

## Description

### Domaine technique de l'invention

L'invention concerne une caisse de véhicule automobile de type fourgon.

### Arrière-plan technique

Les caisses de véhicules de type fourgon sont largement utilisées dans les véhicules utilitaires. Elles comportent généralement au moins une porte battante, plus généralement deux, qui sont destinées à obturer ou à permettre l'accès à une ouverture arrière de ladite caisse. Dans certains cas, elles comportent également au moins une porte latérale coulissante qui est destinée à obturer ou permettre l'accès à une ouverture latérale pratiquée dans un côté de ladite caisse.

En l'absence de porte latérale coulissante, la ou les portes arrière peuvent être ouvertes selon un angle allant jusqu'à 270 degrés, selon lequel elles sont rabattues sur le côté de la caisse pour dégager pleinement l'accès à l'ouverture latérale arrière tout en minimisant l'encombrement transversal du véhicule.

La situation est différente lorsque la caisse comporte une porte latérale coulissante qui est susceptible de s'étendre en position ouverte jusqu'à une position dans laquelle elle pourrait interférer avec une porte arrière rabattue sur le côté de la caisse.

Conventionnellement, dans ce type de configuration, les portes arrière ne peuvent être ouvertes selon un angle allant jusqu'à 270 degrés, car elles sont munies d'une butée limitant leur ouverture à un angle inférieur à 270 degrés, par exemple un angle proche de 235 degrés ou moins, précisément pour éviter cette interférence.

Cette solution permet d'éviter toute collision des portes arrière et latérale, mais n'est toutefois pas satisfaisante. En effet dans ce cas l'encombrement transversal du véhicule est plus élevé que si la ou les portes arrière étaient rabattues à 270 degrés sur le côté de la caisse, parallèlement à celui-ci.

Ceci est pénalisant lorsque plusieurs véhicules sont stationnés côte à côte dans un même espace de chargement. L'encombrement transversal qui doit être prévu pour chaque véhicule réduit le nombre de véhicules qui peuvent être alignés dans ce même espace.

Il existe donc un réel besoin pour une configuration de caisse de véhicule automobile de type fourgon permettant une ouverture de la ou des portes arrière en même temps qu'une porte latérale, sans risque d'interférence, et réciproquement, tout en offrant la possibilité de réduire l'encombrement transversal de la porte battante du véhicule en position ouverte.

### Résumé de l'invention

L'invention satisfait à ce besoin en proposant une configuration de caisse de véhicule automobile de type fourgon comportant des moyens de limitation de la course d'une porte arrière ou latérale en réponse à l'ouverture de l'autre porte.

Dans ce but, l'invention propose une caisse de véhicule automobile de type fourgon, comportant :
- au moins une porte battante arrière, mobile entre une position de fermeture d'une ouverture arrière de ladite caisse et une position ouverte rabattue le long d'un côté de ladite caisse,
- au moins une porte latérale coulissante, mobile entre une position de fermeture d'une ouverture latérale de la caisse et une position ouverte dans laquelle elle s'étend parallèlement audit côté de la caisse,
caractérisé en ce que :
- chaque ouverture arrière/latérale est équipée d'un moyen de détection d'absence de la porte arrière/latérale associée, apte à détecter l'ouverture de ladite porte,
- la caisse est équipée de moyens de limitation de course de l'ouverture de chaque porte,
- chaque moyen de limitation de course d'une porte est activé en réponse à la détection de l'ouverture de l'autre porte par ledit moyen de détection d'absence de l'autre porte.

Selon différentes caractéristiques supplémentaires de l'invention, qui pourront être prises ensemble ou séparément et qui forment autant de modes de réalisation de l'invention :
- chaque moyen de détection d'absence de sa porte arrière/latérale est un capteur disposé sur un montant de l'ouverture arrière/latérale associée,
- le moyen de limitation de course de l'ouverture de la porte coulissante est une butée escamotable qui est disposée sur le côté de la caisse en avant d'une position extrême d'un bord libre de la porte battante dans sa position ouverte rabattue sur ledit côté, ladite butée escamotable étant apte à faire saille à partir dudit côté pour s'opposer au coulissement de ladite porte latérale au-delà de ladite position,
- la butée est coulissante perpendiculairement au côté de la caisse,
- le moyen de limitation de course de l'ouverture de la porte battante est configuré pour limiter l'ouverture de ladite porte battante selon un angle déterminé strictement inférieur à 270 degrés,
- l'angle déterminé est configuré pour permettre un passage de la porte coulissante en position de pleine ouverture sans interférence avec la porte battante,
- la caisse comporte un tirant de porte battante, comportant une lame dont une première extrémité est articulée sur une face interne de la porte battante et dont une deuxième extrémité conformée en crochet est apte à coopérer sélectivement avec un crochet complémentaire porté par le montant de l'ouverture arrière,
- ledit moyen de limitation de course de l'ouverture de la porte battante est configuré pour interdire le décrochage desdits crochets dudit tirant et dudit montant,
- le moyen de limitation de course de l'ouverture de la porte battante comporte un doigt escamotable, solidaire du montant de l'ouverture arrière qui est apte à former une butée pour la deuxième extrémité de la lame afin d'interdire le décrochage desdits crochets,
- le doigt escamotable est un doigt coulissant verticalement,
- le moyen de limitation de course de l'ouverture de la porte battante et le moyen de détection d'absence de la porte arrière sont portés par une même platine, fixée au montant de l'ouverture arrière,
- les capteurs de détection d'absence des portes arrière et latérale, le doigt escamotable et la butée escamotable sont électriques et connectés à au moins une unité de contrôle.

### Brève description des figures

L'invention sera mieux comprise, et d'autres buts, détails, caractéristiques et avantages de celle-ci apparaîtront plus clairement au cours de la description explicative détaillée qui va suivre, d'au moins un mode de réalisation de l'invention donné à titre d'exemple purement illustratif et non limitatif, en référence aux dessins schématiques annexés parmi lesquels :
La figure 1 est une vue en perspective d'un véhicule de type fourgon ;
La figure 2 est une demi-vue schématique en coupe par le plan 2-2 d'un véhicule selon l'état de la technique analogue à celui de la figure 1 ayant une porte battante et une porte coulissante fermée ;
La figure 3 est une demi-vue schématique en coupe par le plan 2-2 du véhicule de la figure 2 ayant une porte battante partiellement ouverte à 90 degrés et une porte coulissante ouverte ;
La figure 4 est une demi-vue schématique en coupe par le plan 2-2 du véhicule de la figure 2 ayant une porte battante ouverte à 235 degrés et une porte coulissante ouverte ;
La figure 5 est une demi-vue schématique en coupe par le plan 2-2 d'un véhicule selon l'invention analogue à celui de la figure 1 ayant une porte battante fermée et une porte coulissante fermée ;
La figure 6 est une demi-vue schématique en coupe par le plan 2-2 du véhicule de la figure 5 ayant une porte battante fermée et une porte coulissante ouverte ;
La figure 7 est une demi-vue schématique en coupe par le plan 2-2 du véhicule de la figure 5 ayant une porte battante partiellement ouverte à 90 degrés et une porte coulissante ouverte ;
La figure 8 est une demi-vue schématique en coupe par le plan 2-2 du véhicule de la figure 5 ayant une porte battante ouverte à 270 degrés et une porte coulissante fermée ;
La figure 9 est une demi-vue schématique en coupe par le plan 2-2 du véhicule de la figure 5 ayant une porte battante ouverte à 270 degrés et une porte coulissante partiellement ouverte.

### Description détaillée de l'invention

Dans la description qui va suivre, des chiffres de référence identiques désignent des pièces identiques ou ayant des fonctions similaires.

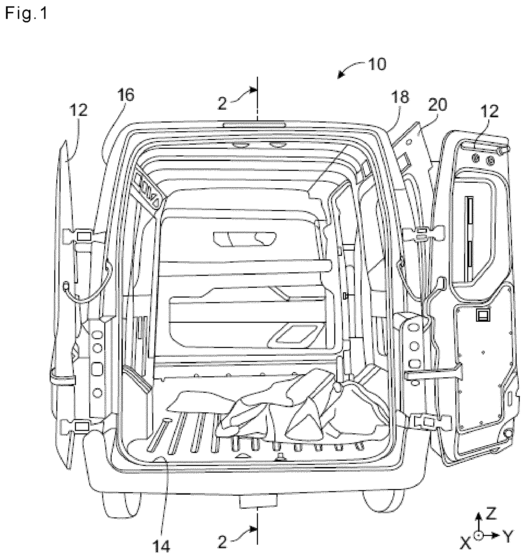

On a représenté à la figure 1 un véhicule automobile de type fourgon comportant une caisse 10 adaptée à cet usage. La caisse 10 et ses constituants seront décrits en référence aux directions du trièdre "X", "Y", "Z", où "X" désigne la direction longitudinale, transversale, "Y" désigne la direction transversale et "Z" désigne la direction verticale.

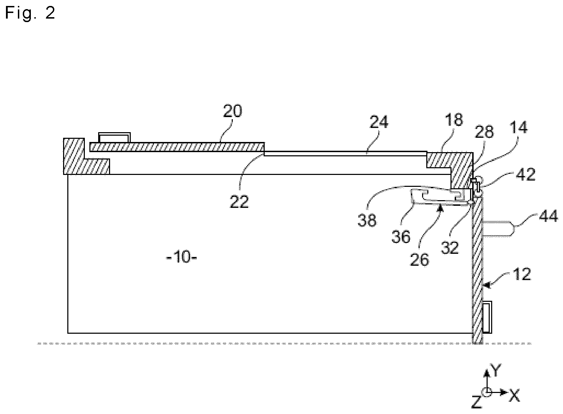

De manière connue la caisse 10 comporte au moins une porte battante arrière 12, ici deux portes battantes 12, qui sont mobiles entre une position de fermeture d'une ouverture arrière 14 de la caisse 10, représentée par exemple à la figure 2, et une position ouverte rabattue le long de côtés 16, 18 de ladite caisse 10. Dans le cas présent, les deux portes battantes 12 sont aptes à obturer ou permettre l'accès à une même ouverture arrière commune 14, mais il sera compris que cette disposition n'est pas limitative de l'invention.

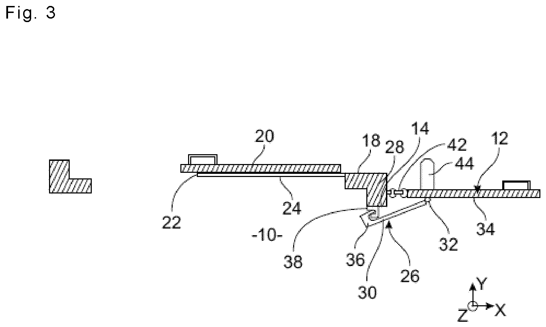

La caisse 10 comporte une ouverture latérale 22 sur son côté 18. Elle comporte au moins une porte latérale 20 coulissante, qui est mobile entre une position de fermeture de l'ouverture latérale 22 de la caisse 10, comme représentée à la figure 2, et une position ouverte, comme représenté aux figures 1 et 3, dans laquelle elle s'étend parallèlement au côté 18 de la caisse. La porte est montée coulissante sur un rail 24.

Conventionnellement, comme on peut le voir sur les figures 2 à 4, la porte arrière 12 peut être ouverte selon différentes configurations.

Dans une première configuration qui a été représentée à la figure 2, la porte battante 12 est fermée.

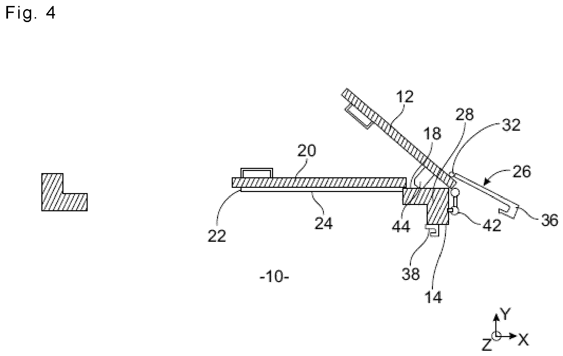

Dans une deuxième configuration qui a été représentée à la figure 3, la porte battante 12 est ouverte au maximum à 90 degrés. Elle est limitée à cet angle d'ouverture par un tirant 26 qui la lie à un montant 28 bordant latéralement l'ouverture 14. Le tirant 26 comporte pour l'essentiel une lame 30 dont une première extrémité 32 est articulée sur une face interne 34 de la porte battante et dont une deuxième extrémité 36 est conformée en crochet. Cette deuxième extrémité 36 en crochet est apte à coopérer sélectivement avec un crochet complémentaire 38 porté par le montant 28 de l'ouverture arrière. La deuxième extrémité en crochet 36 est susceptible d'être décrochée du crochet 38 pour permettre une ouverture de la porte battante 12 selon un angle supérieur, comme représenté à la figure 4. La porte battante 12 est à cet effet articulée par rapport au montant 28 par l'intermédiaire d'une charnière double 42.

Dans une troisième configuration qui a été représentée à la figure 4, la ou les portes arrière battantes peuvent être ouvertes selon un angle supérieur à 90 degrés.

Elles ne peuvent toutefois pas être complètement rabattues sur le côté 18 et être ouvertes selon un angle allant jusqu'à 270 degrés car elles sont munies d'une butée 44 limitant leur ouverture à un angle inférieur à 270 degrés, par exemple 235 degrés, pour éviter toute interférence avec la porte coulissante 20 lorsqu'elle occupe sa position de pleine ouverture, comme représenté à la figure 4.

Cette solution permet ainsi d'éviter toute collision des portes arrière 12 et latérale 20, mais n'est toutefois pas satisfaisante. En Effet dans ce cas l'encombrement transversal du véhicule est plus élevé que si la ou les portes arrière étaient rabattues à 270 degrés, c'est-à-dire parallèlement au côté 18 de la caisse.

Ceci est particulièrement pénalisant lorsque plusieurs véhicules sont stationnés côte à côte dans un même espace de chargement, car de ce fait l'espace entre deux véhicules doit être augmenté afin de permettre le passage des portes arrière battantes. Ceci est particulièrement gênant lorsque le véhicule doit être garé de manière que son ouverture arrière soit contre un quai de chargement.

L'invention remédie à ce problème en permettant d'éviter une ouverture simultanée des portes arrière battante 12 et latérale coulissante 20 et qu'elles ne puissent donc pas interférer l'une avec l'autre.

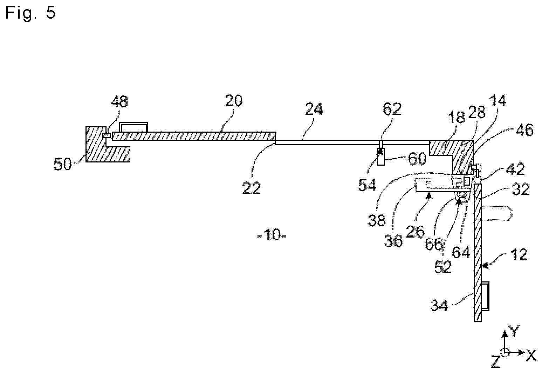

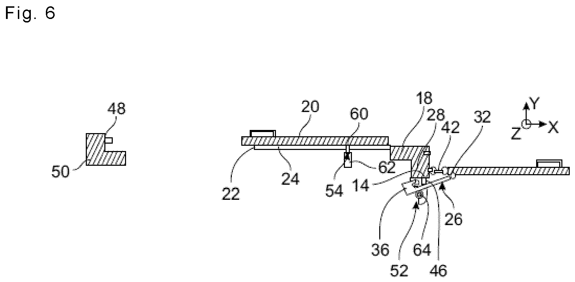

A cet effet, comme l'illustrent les figures 5 à 9, la caisse 10 est caractérisée, en premier lieu, en ce que chaque ouverture, c'est-à-dire l'ouverture arrière 14 et l'ouverture latérale 20 est équipée d'un moyen respectif 46, 48 de détection d'absence de la porte arrière 12 et de la porte latérale 20 associée, apte à détecter l'ouverture de cette porte 14, 20. Le terme « ouverture » signifie que la porte considérée n'occupe plus sa position de fermeture, elle peut donc être totalement ouverte ou seulement partiellement ouverte.

Chaque moyen 46, 48 de détection d'absence est par exemple un capteur physique tel qu'un interrupteur normalement ouvert, ou un capteur optique.

Plus particulièrement, le moyen 46 de détection d'absence de la porte arrière 12 est un capteur disposé sur le montant 28 de l'ouverture arrière 12 associée. De même, le moyen 48 de détection d'absence de la porte latérale 20 est un capteur disposé sur un montant 50 de l'ouverture latérale 22 associée.

En second lieu la caisse 10 est équipée de moyens 52, 54 de limitation de course de l'ouverture de chaque porte 12, 20. L'ouverture de la porte arrière 12 peut être limitée dans sa course par un moyen de limitation de course 52 et l'ouverture de la porte latérale 20 peut être limitée dans sa course par un moyen de limitation de course 54.

En troisième lieu, chaque moyen de limitation de course 52, 54 d'une porte 12, 20 est activé en réponse à la détection de l'ouverture de l'autre porte 20, 12 par le moyen de détection d'absence 48, 46 de l'autre porte 20, 12.

En résumé, chaque moyen de limitation de course d'une porte est déclenché par l'ouverture de l'autre porte. Il n'y a donc pas de risque d'interférence entre les portes 12, 20 puisque chaque porte est limitée dans son ouverture pour ne pas interférer avec l'autre.

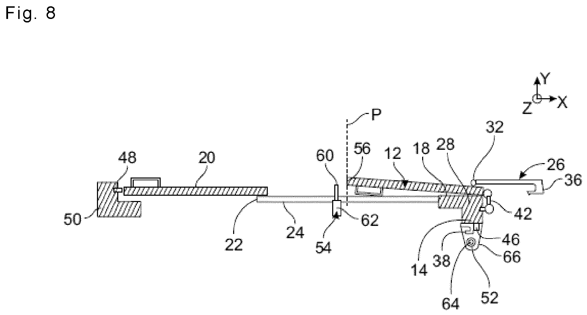

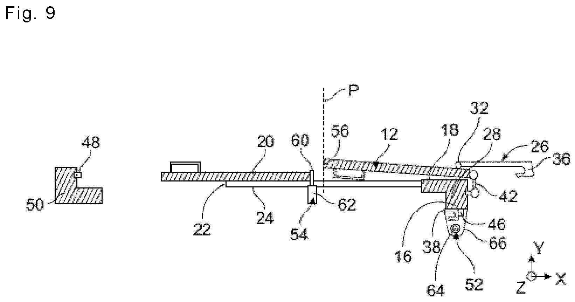

Dans le mode de réalisation préféré de l'invention, la porte latérale 20 est une porte coulissante manuelle. Dans ce cadre, le moyen 54 de limitation de course de l'ouverture de la porte coulissante est une butée escamotable qui est disposée sur le côté 18 de la caisse 10 en avant d'une position extrême P d'un bord libre 56 de la porte battante 12 dans sa position ouverte rabattue sur le côté 18, comme représenté sur les figures 8 et 9.

La butée escamotable est apte à faire saillie à partir du côté 18 pour s'opposer au coulissement de la porte latérale 20 au-delà de la position P, comme représenté à la figure 9.

Sur les figures la butée 54 est apte à recevoir directement la porte 20 latérale en butée mais il sera compris qu'elle pourrait être logée dans le rail 24 et recevoir en butée un galet de guidage de la porte 20.

Plusieurs modes de réalisation de cette butée peuvent être envisagés. Par exemple, la butée 54 peut être coulissante perpendiculairement au côté 18 de la caisse 10, en étant réalisée sous la forme d'un pêne 60 pouvant faire saillie à partir d'un corps de vérin 62 solidaire du côté 18.

Il va de soi que d'autres modes de réalisation peuvent être envisagés, comme une butée réalisée sous la forme d'un loquet pivotant autour de l'axe Z dans le plan X, Y. Dans le cas particulier où la porte latérale 20 serait une porte motorisée électrique, le moyen 54 de limitation de course de l'ouverture de la porte coulissante pourrait être un moyen électronique de commande d'un moteur de la porte, qui limiterait son ouverture selon une course déterminée.

En ce qui concerne la porte battante 12, le moyen de limitation de course 52 de l'ouverture de la porte battante 12 est préférentiellement configuré pour limiter l'ouverture de la porte battante selon un angle déterminé strictement inférieur à 270 degrés, ledit angle déterminé étant configuré pour permettre un passage de la porte coulissante 20 en position de pleine ouverture sans interférence avec la porte battante 12.

L'invention tire avantageusement parti de la présence du tirant de porte battante 26 existant pour limiter la course d'ouverture de la porte 12. Avantageusement, le moyen 52 de limitation de course de l'ouverture de la porte battante est configuré pour interdire le décrochage des crochets 36, 38 du tirant 26 et du montant 28.

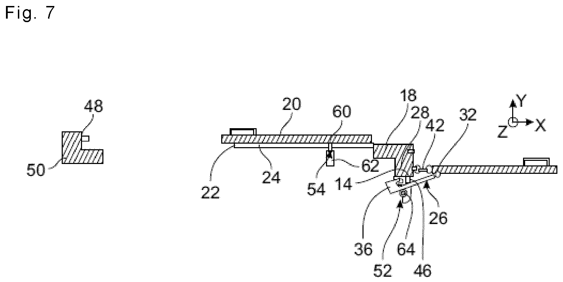

Plusieurs solutions techniques peuvent être envisagées sans limitation de l'invention. Toutefois de préférence, les crochets 36, 38 devant être écartés l'un de l'autre pour être libérés, selon un mode de réalisation préféré de l'invention, le moyen 52 de limitation de course de l'ouverture de la porte battante comporte un doigt escamotable 64, solidaire du montant 28 de l'ouverture arrière 14 qui est apte à former une butée pour la deuxième extrémité 36 conformée en crochet de la lame 30 afin d'interdire le décrochage desdits crochets 36, 38. Lorsque le moyen 52 de limitation de course est activé, le doigt 64 affleure au contact de la deuxième extrémité 36 et lui interdit de s'écarter du crochet 38, rendant leur séparation impossible. De ce fait, le tirant 30 reste interposé entre le montant 28 et la porte 12, qui ne peut s'ouvrir à plus de 90 degrés, comme représenté à la figure 7. La porte coulissante 20 peut alors être ouverte dans sa position de pleine ouverture.

De préférence, le doigt escamotable 64 est un doigt coulissant verticalement suivant la direction Z, motorisé par exemple par un vérin électrique.

Dans un souci de compacité, sans limitation de l'invention, le moyen de limitation 52 de course 46 de l'ouverture de la porte battante et le moyen de détection d'absence de la porte arrière peuvent être portés par une même platine 66, fixée au montant 28 de l'ouverture arrière 14.

En variante (non représentée), le moyen de limitation de course 52 pourrait permettre de limiter la course de la porte battante 12 à un angle proche de 235 degrés dans lequel la porte battante 12 pourrait s'ouvrir à plus de 90 degrés tout en permettant à la porte coulissante 20 de s'étendre sous la porte battante 12. En cela, le moyen de limitation de course 52 correspondrait sensiblement aux caractéristiques de la butée 44 selon l'état de la technique, à cette différence près qu'il ne serait pas permanent comme l'est la butée 44. Il pourrait s'agir d'une butée escamotable portée par la porte 12, ou de tout autre moyen limitant la course d'ouverture de la porte 12. Toutefois, cette configuration se révélerait tout aussi encombrante transversalement selon la direction Y que la conception connue de l'état de la technique, et n'est donc pas privilégiée.

Dans le mode de réalisation préféré de l'invention, les capteurs 46, 48 de détection d'absence des portes arrière 12 et latérale 20, le doigt escamotable 64 et la butée escamotable 54 sont de préférence électriques. Ils sont connectés à au moins une unité de contrôle (non représentée) qui peut être un module intégré de manière classique à un boîtier de servitudes du véhicule.

L'invention permet de gérer de manière simple et efficace l'ouverture des portes 12, 20 d'un véhicule de type fourgon.

## Revendications

1. Caisse (10) de véhicule automobile de type fourgon, comportant :
- au moins une porte battante arrière (12), mobile entre une position de fermeture d'une ouverture arrière (14) de ladite caisse (10) et une position ouverte rabattue le long d'un côté (18) de ladite caisse (10),
- au moins une porte latérale coulissante (20), mobile entre une position de fermeture d'une ouverture latérale (22) de la caisse (10) et une position ouverte dans laquelle elle s'étend parallèlement audit côté (18) de la caisse (10),
**caractérisée en ce que** :
- chaque ouverture arrière (12) ou latérale (20) est équipée d'un moyen (46, 48) de détection d'absence de la porte arrière (12) ou latérale (20) associée, apte à détecter l'ouverture de ladite porte (12, 20),
- la caisse (10) est équipée de moyens (52, 54) de limitation de course de l'ouverture de chaque porte (12, 20),
- chaque moyen (52, 54) de limitation de course d'une porte (12, 20) est activé en réponse à la détection de l'ouverture de l'autre porte (20, 12) par ledit moyen de détection (48, 46) d'absence de l'autre porte (20, 12).

2. Caisse (10) selon la revendication précédente, **caractérisée en ce que** chaque moyen (46, 48) de détection d'absence de sa porte arrière (12) ou latérale (20) est un capteur disposé sur un montant (28, 50) de l'ouverture arrière (14) ou latérale (20) associée.

3. Caisse (10) selon l'une des revendications précédentes, **caractérisée en ce que** le moyen (54) de limitation de course de l'ouverture de la porte coulissante est une butée escamotable qui est disposée sur le côté (18) de la caisse (10) en avant d'une position (P) extrême d'un bord libre (56) de la porte battante (12) dans sa position ouverte rabattue sur ledit côté (18), ladite butée (54) escamotable étant apte à faire saille à partir dudit côté (18) pour s'opposer au coulissement de ladite porte latérale (20) au-delà de ladite position (P).

4. Caisse (10) selon la revendication précédente, **caractérisée en ce que** la butée (54) est coulissante perpendiculairement au côté (18) de la caisse (10).

5. Caisse (10) selon l'une des revendications précédentes **caractérisée en ce que** le moyen (52) de limitation de course de l'ouverture de la porte battante (12) est configuré pour limiter l'ouverture de ladite porte battante (12) selon un angle déterminé strictement inférieur à 270 degrés, ledit angle déterminé étant configuré pour permettre un passage de la porte coulissante (20) en position de pleine ouverture sans interférence avec la porte battante (12).

6. Caisse (10) selon l'une des revendications précédentes, **caractérisée en ce qu'**elle comporte un tirant (26) de porte battante, comportant une lame (30) dont une première extrémité (32) est articulée sur une face interne (34) de la porte battante (12) et dont une deuxième extrémité (36) conformée en crochet est apte à coopérer sélectivement avec un crochet (38) complémentaire porté par le montant (28) de l'ouverture arrière (14), et **en ce que** ledit moyen (52) de limitation de course de l'ouverture de la porte battante (12) est configuré pour interdire le décrochage desdits crochets (36, 38) dudit tirant (26) et dudit montant (28).

7. Caisse (10) selon la revendication précédente, **caractérisée en ce que** le moyen (52) de limitation de course de l'ouverture de la porte battante (12) comporte un doigt escamotable (64), solidaire du montant (28) de l'ouverture arrière (14) qui est apte à former une butée pour la deuxième extrémité (36) de la lame (30) afin d'interdire le décrochage desdits crochets (36, 38).

8. Caisse (10) selon la revendication précédente, **caractérisée en ce que** le doigt (64) escamotable est un doigt coulissant verticalement.

9. Caisse (10) selon l'une des revendications 7 ou 8 prises en combinaison avec la revendication 2, **caractérisée en ce que** le moyen (52) de limitation de course de l'ouverture de la porte battante et le moyen (46) de détection d'absence de la porte arrière sont portés par une même platine (66), fixée au montant (28) de l'ouverture arrière (14).

10. Caisse selon les revendications 2, 4 et 8 prises en combinaison, **caractérisée en ce que** les capteurs de détection d'absence (46, 48) des portes arrière (12) et latérale (20), le doigt escamotable (64) et la butée escamotable (54) sont électriques et connectés à au moins une unité de contrôle.
